# EUROPÄISCHE PATENTANMELDUNG

(11) **EP 0 850 559 A2**
(43) Veröffentlichungstag der Anmeldung: **01.07.1998**
(21) Anmeldenummer: 97118385.0
(22) Anmeldetag: 23.10.1997
(51) Int. Cl.: A01G 1/00

(54) **Vegetationselement**

(30) Priorität: 23.12.1996 DE 19654049
(71) Anmelder: Behrens, Wolfgang, D-27243 Gross Ippener (DE)
(72) Erfinder: Behrens, Wolfgang, D-27243 Gross Ippener (DE)
(74) Vertreter: Patentanwälte Thömen & Körner

(57) **Zusammenfassung**

Es wird ein Vegetationselement zur Bildung einer Begrünung auf künstlichen Flächen (z. B. Dächer) beschrieben. Das Vegetationselement umfaßt einen aus synthetischem und/oder organischem Material bestehenden Vegetationsträger für eine Vegetation, wobei der Vegetationsträger aus mindestens einer Schicht besteht. Die unterste Schicht des Vegetationsträgers ist auf einer Dichtungsbahn befestigt, die zur Abdichtung eines zu begrünenden Daches bestimmt ist oder als Wurzelschutzschicht zur Verhinderung einer Durchwurzelung ausgebildet ist.

## Beschreibung

Die Erfindung betrifft ein Vegetationselement gemäß dem Oberbegriff des Patentanspruchs 1.

Bekanntlich werden Vegetationselemente verwendet, um künstliche Flächen, wie Dächer von Häusern, zu begrünen. Ein wesentlicher Bestandteil eines Vegetationselementes ist der Vegetationsträger, der einschichtig oder auch mehrschichtig ausgebildet sein kann, und welcher aus synthetischem und/oder organischem Material besteht. Der Vegetationsträger umfaßt unter anderem ein Substrat und Saatkörner für die Pflanzen bzw. die Pflanzen und deren Wurzeln selbst.

Die Vegetationselemente können entweder außerhalb ihres späteren Einsatzortes vorkultiviert werden, bevor sie dann auf einem Dach verlegt werden. Es ist aber auch möglich, die Begrünung eines Daches direkt vor Ort vorzunehmen und den Vegetationskörper direkt auf dem Dach zu verlegen. Im letzteren Fall erfolgt also die Kultivierung und das Wachstum der Pflanzen auf dem Dach selbst.

Unabhängig von den beschriebenen Vorgehensweisen ist es in jedem Fall erforderlich, das Vegetationselement mit dem Vegetationsträger auf dem betreffenden Dach zu verlegen, wobei vorzugsweise Flachdächer oder Dächer mit geringen Neigungen in Betracht kommen.

In der Praxis muß beachtet werden, daß die auf einem Dach verlegten Vegetationselemente äußeren Einflüssen in Form von Erosion und von Windsogkräften ausgesetzt sind, die dazu führen können, daß die Vegetationselemente durch Windsogkräfte abgehoben und weggeweht werden können. Dies trifft insbesondere bei dünnen und leichten Vegetationselementen zu. Jedoch sind überwiegend leichte und dünne Vegetationselemente erwünscht, da wegen ihres geringen Gewichtes das Dach auch nur gering belastet wird.

Der Erfindung liegt die Aufgabe zugrunde, ein Vegetationselement zu schaffen, welches zur Bildung einer Begrünung in einfacher Weise auf einem Dach verlegt werden kann und trotz geringen Gewichtes gegen Erosion und Windsogkräfte geschützt ist.

Die Lösung dieser Aufgabe erfolgt durch die Merkmale des Patentanspruchs 1.

Die Erfindung geht von der Überlegung aus, daß das zu begrünende Dach auf seiner Oberfläche mit einer Abdichtung in Form einer Dichtungsbahn versehen ist, die aus einem geeigneten Abdichtungsmaterial besteht, z. B. aus PVC oder aus bituminösen Dachbahnen. Auf diese auf dem Dach befestigte Dichtungsbahn, unter welcher sich üblicherweise eine Dämmschicht befindet, hat man bisher die Vegetationselemente verlegt.

Die Erfindung sieht nun vor, unten an dem Vegetationselement bzw. an der untersten Schicht des Vegetationsträgers eine Dachbahn zu befestigen, wodurch eine durch das Vegetationselement und die Dachbahn gebildete Einheit entsteht. Dieses neue Vegetationselement wird auf dem Dach verlegt, wobei die Dichtungsbahn in an sich bekannter Weise mechanisch oder auf andere Art mit der Dachoberfläche verbunden wird, so wie man bisher auch die Dichtungsbahn alleine auf dem Dach befestigt hat. Wenn die Dichtungsbahn auf dem Dach befestigt ist, ist das damit verbundene Vegetationselement gegen Erosion und gegen Windsogkräfte geschützt, so daß in erwünschter Weise auch dünne und leichte Vegetationselemente zum Einsatz gelangen können.

Wenn man das neuartige Vegetationselement verwendet, kann bei dem betreffenden Dach auf die übliche Dichtungsbahn verzichtet werden, denn diese wird bereits mit dem Verlegen des Vegetationselements mitgeliefert. Selbstverständlich ist es aber auch denkbar, das neue Vegetationselement auf solchen Dächern zu verlegen, die bereits mit einer Dichtungsbahn versehen sind.

In manchen Fällen sind die auf einem Dach bereits vorhandenen Dichtungsbahnen nicht wurzelfest ausgebildet, so daß die Gefahr besteht, daß sie von den Wurzeln der Pflanzen eines Vegetationselementes durchwurzelt werden. In diesem Fall sieht die Erfindung vor, die an der untersten Schicht des Vegetationsträgers befestigte Dichtungsbahn als Wurzelschutzschicht auszubilden.

Die Fläche der Dichtungsbahn ist bei der Erfindung größer als die Fläche des Vegetationsträgers, so daß die Dichtungsbahn den Vegetationsträger an zwei gegenüberliegenden Seiten überlappt und daß dort freie Ränder vorhanden sind. Dies ist dann von Vorteil, wenn mehrere bahnförmige Vegetationselemente nebeneinander verlegt werden. Im Bereich der freien Ränder können nämlich die benachbarten Dichtungsbahnen miteinander verschweißt werden. Dadurch ergibt sich eine lückenlose geschlossene Dichtungsbahn für das Dach. Der unter Umständen verbleibende freie Spalt zwischen benachbarten Vegetationsträgern kann nachträglich mit Material eines Vegetationsträgers ausgefüllt werden.

Die Dichtungsbahn läßt sich in vorteilhafter Weise mit der untersten Schicht des Vegetationsträgers verkleben oder auch verschweißen.

Eine andere zweckmäßige Ausgestaltung der Erfindung sieht vor, daß zwischen der untersten Schicht des Vegetationsträgers und der Dichtungsbahn eine Binderschicht angeordnet ist, die zur Befestigung der untersten Schicht des Vegetationsträgers mit der Dichtungsbahn dient.

Durch eine Befestigung über die Binderschicht wird ein besonders sicherer Halt zwischen dem Vegetationsträger und der Dichtungsbahn erzielt. Die Dichtungsbahn ist nämlich sehr feinporig, während der Vegetationsträger grobporig ausgebildet sein kann, und eine Verbindung zwischen einer grobporigen und einer feinporigen Oberfläche ist unter Umständen nicht sicher haltbar. Die Binderschicht übernimmt eine Art Adapterfunktion zur Anpassung der unterschiedlichen Oberflächenstrukturen der Dichtungsbahn und des Vegetationsträgers und sorgt für eine sichere Befestigung der Dichtungsbahn an dem Vegetationsträger.

Eine andere Weiterbildung der Erfindung sieht vor, daß in oder auf dem Vegetationsträger Klebstoffe in Form eines Trockenklebers angeordnet sind. Dadurch besteht die Möglichkeit, auf den Vegetationsträger mit dem Trockenkleber eine weitere Vegetationsschicht aufzubringen, nachdem das Vegetationselement auf dem Dach verlegt ist. Durch Zufuhr von Wasser wird der Trockenkleber aktiviert und die weitere Vegetationsschicht mit dem darunter befindlichen Vegetationsträger bzw. der darunter liegenden Schicht klebend verbunden, wobei die Verbindung zumindest solange aufrechterhalten wird, bis durch das Pflanzenwachstum und durch die damit verbundene Verwurzelung eine natürliche Verbindung der beiden Schichten im Sinne einer biologischen Armierung hergestellt ist.

Ferner ist es zweckmäßig, in oder auf dem Vegetationsträger Düngemittel bzw. Bodenverbesserungsmittel und/oder Bodenhilfsstoffe anzuordnen. Dadurch wird das Wachstum der Pflanzen besonders gefördert. Ferner können auch im oder auf dem Vegetationsträger Saatkörner für die Pflanzen angeordnet sein, welche später die Begrünung bilden sollen.

In weiterer zweckmäßiger Ausgestaltung der Erfindung dient der Vegetationsträger als Verwurzelungsschicht oder auch als Be- und/oder Entwässerungsschicht und ist zur Aufnahme weiterer Funktionsschichten vorgesehen. In diesen Fällen ist es also die Verwurzelungsschicht bzw. die Be- und/oder Entwässerungsschicht des Vegetationsträgers, die mit der Dichtungsbahn befestigt ist. Auf der Verwurzelungsschicht - die Schicht, in der sich die Wurzeln der Pflanzen im wesentlichen erstrecken, bzw. auf die Be- und/oder Entwässerungsschicht können also weitere Schichten des Vegetationsträgers mit anderen Funktionen folgen.

Anhand der in der Zeichnung dargestellten Ausführungsbeispiele wird die Erfindung nachfolgend näher erläutert. Es zeigen:
- Fig. 1: eine Querschnittsansicht eines Vegetationselementes mit einer Dichtungsbahn,
- Fig. 2: ein Vegatationselement gemäß Fig. 1, jedoch mit einer Begrünung,
- Fig.3: ein auf einem Dach befindliches Vegetationselement mit einem zweischichtigen Vegetationsträger, und
- Fig. 4: eine weitere Ausführungsform eines Vegetationselementes.

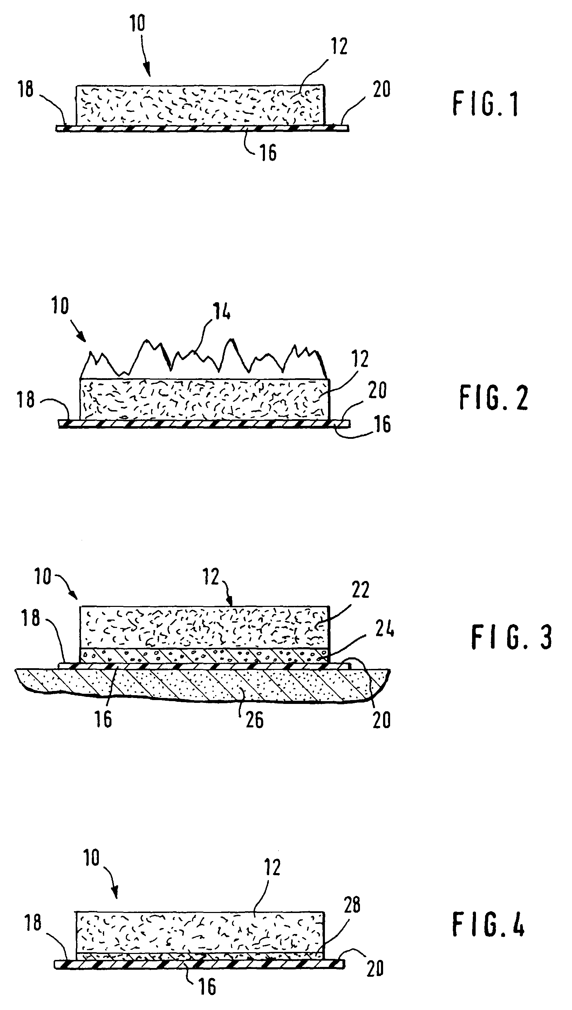

Das Vegetationselement 10 gemäß Fig. 1 umfaßt einen Vegetationsträger 12, der mit seiner unteren Seite auf einer Dichtungsbahn 16 befestigt ist. Die Dichtungsbahn 16 dient entweder zur Abdichtung eines zu begrünenden Daches oder ist als Wurzelschutzschicht zur Verhinderung einer Duchwurzelung ausgebildet.

Fig. 2 zeigt das Vegetationselement gemäß Fig. 1 nach Abschluß einer Kultivierung, so daß das Vegetationselement 10 mit einer Begrünung 14 in Form von Pflanzen versehen ist.

In Fig. 3 ist ein Vegetationselement 10 dargestellt, dessen Vegetationsträger 12 zweischichtig mit einer oberen Vegetationsschicht 22 und einer unteren Drainageschicht 24 ausgebildet ist. In diesem Fall ist die unterste Schicht, also die Drainageschicht 24 mit der Dichtungsbahn 16 verbunden, die ihrerseits in an sich bekannter Weise auf einem Dach 26 befestigt ist und für das Dach 26 die Abdichtung bildet.

Bei dem in Fig. 4 dargestellten Vegetationselement ist zur Befestigung des Vegetationsträgers 10 auf der Dichtungsbahn 16 eine Binderschicht 28 zwischen dem Vegetationsträger 12 und der Dichtungsbahn 16 vorgesehen.

Generell kann die Verbindung der untersten Schicht des Vegetationsträgers 12 mit der Dichtungsbahn 16 durch Verkleben oder verschweißen erfolgen.

In den Darstellungen gemäß Fig. 1 - 4 ist zu erkennen, daß die Fläche der Dichtungsbahn 16 größer als die Fläche des Vegetationsträgers 12 ist, so daß auf beiden Seiten jeweils ein freier Rand 18 und 20 verbleibt. Diese Ränder 18 und 20 dienen als Schweißränder, wenn mehrere Dichtungsbahnen 16 mit dem darauf befindlichen Vegetationselement 10 nebeneinander auf einem Dach verlegt und die einzelnen Bahnen miteinander verschweißt werden.

Die Dichtungsbahn 16 kann in an sich bekannter Weise aufgebaut sein und aus einem geeigneten Abdichtungsmaterial, z. B. aus PVC, bestehen oder auch als bituminöse Dachbahn ausgebildet sein.

## Patentansprüche

1. Vegetationselement (10) zur Bildung einer Begrünung (14) auf künstlichen Flächen, z. B. auf Dächern (26), mit einem aus synthetischen und/oder organischen Material bestehenden Vegetationsträger (12) für eine Vegetation, wobei der Vegetationsträger (12) aus mindestens einer Schicht besteht, **dadurch gekennzeichnet,** daß an der untersten Schicht des Vegetationsträgers (12) eine Dichtungsbahn (16) befestigt ist, die zur Abdichtung eines zu begrünenden Daches (26) und als Wurzelschutzschicht zur Verhinderung einer Durchwurzelung der Dichtungsbahn (16) bestimmt ist, und daß die Fläche der Dichtungsbahn (16) größer als die Fläche des Vegetationsträgers (12) ist, so daß die Dichtungsbahn (16) den Vegetationsträger (12) an zwei gegenüberliegenden Seiten überlappt und dort jeweils einen freien Rand (18, 20) bildet.

2. Vegetationselement nach Anspruch 1, **dadurch gekennzeichnet,** daß die Dichtungsbahn (16) mit der untersten Schicht des Vegetationsträgers (12) verklebt ist.

3. Vegetationselement nach Anspruch 1 und/oder 2, **dadurch gekennzeichnet,** daß die Dichtungsbahn (16) mit der untersten Schicht des Vegetationsträgers (12) verschweißt ist.

4. Vegetationselement nach einem der vorhergehenden Ansprüche 1 - 3, **dadurch gekennzeichnet,** daß zwischen der untersten Schicht des Vegetationsträgers (12) und der Dichtungsbahn (16) eine Binderschicht (28) zur Befestigung des Vegetationsträgers (12) mit der Dichtungsbahn (16) angeordnet ist.

5. Vegetationselement nach einem der vorhergehenden Ansprüche 1 - 4, **dadurch gekennzeichnet,** daß in oder auf dem Vegetationsträger (12) Klebstoffe in Form eines Trockenklebers angeordnet sind.

6. Vegetationselement nach einem der vorhergehenden Ansprüche 1 - 5, **dadurch gekennzeichnet,** daß in oder auf dem Vegetationsträger (12) Düngemittel angeordnet sind.

7. Vegetationselement nach einem der vorhergehenden Ansprüche 1 - 6, **dadurch gekennzeichnet,** daß in oder auf dem Vegetationsträger (12) Bodenverbesserungsmittel und/oder Bodenhilfsstoffe angeordnet sind.

8. Vegetationselement nach einem der vorhergehenden Ansprüche 1 - 7, **dadurch gekennzeichnet,** daß in oder auf dem Vegetationsträger (12) Saatkörner angeordnet sind.

9. Vegetationselement nach einem der vorhergehenden Ansprüche 1 - 8, **dadurch gekennzeichnet,** daß der Vegetationsträger (12) als Verwurzelungsschicht dient und zur Aufnahme weiterer Funktionsschichten des Vegetationselements vorgesehen ist.

10. Vegetationselement nach einem der vorhergehenden Ansprüche 1 - 9, **dadurch gekennzeichnet,** daß der Vegetationsträger (12) als Be- und/oder Entwässerungsschicht dient und zur Aufnahme weiterer Funktionsschichten vorgesehen ist.
